# EUROPÄISCHE PATENTANMELDUNG

(11) **EP 3 067 850 A1**
(43) Veröffentlichungstag der Anmeldung: **14.09.2016**
(21) Anmeldenummer: 15158503.1
(22) Anmeldetag: 10.03.2015
(51) Int. Cl.: G06Q 40/08, G06Q 10/10

(54) **Verfahren und Vorrichtung zum vermitteln einer betrieblichen Altersvorsorge**

(71) Anmelder: AUTOBAV GmbH & Co. KG, 21647 Moisburg (DE)
(72) Erfinder: BURKART, Torsten, 76287 Rheinstetten (DE)
(74) Vertreter: Hauck Patentanwaltspartnerschaft mbB

(57) **Zusammenfassung**

Verfahren zum Vermitteln einer betrieblichen Altersvorsorge an Arbeitnehmer eines Unternehmens, wobei das Verfahren die folgenden Schritte aufweist:
a) Erzeugen einer Datenstruktur mit Projektstammdaten über das Unternehmen auf einem zentralen Computersystem,
b) Erzeugen eines Softwareprogramms mit dem zentralen Computersystem, wobei das Softwareprogramm ein Eingabemodul und ein Verschlüsselungsmodul sowie die Projektstammdaten umfasst,
c) Übertragen des Softwareprogramms von dem zentralen Computersystem zu einem Computersystem des Unternehmens und Ausführen des Softwareprogramms auf dem Computersystem des Unternehmens,
d) Erfassen von persönlichen Daten über einen Arbeitnehmer einschließlich Lohndaten mit dem Eingabemodul,
e) Verschlüsseln vertraulicher Daten über den Arbeitnehmer mit dem Verschlüsselungsmodul und Erzeugen eines Datensatzes über den Arbeitnehmer, der einen unverschlüsselten Teil und einen verschlüsselten Teil enthält, sowie eines Schlüssels, mit dem der verschlüsselte Teil entschlüsselbar ist,
f) Übermitteln des Schlüssel an den Arbeitnehmer,
g) Übermitteln des Datensatzes an das zentrale Computersystem,
h) Übermitteln des Schlüssels an das zentrale Computersystem durch den Arbeitnehmer,
i) Entschlüsseln des verschlüsselten Teils des Datensatzes in dem zentralen Computersystem,
j) Übermitteln eines Angebots für eine betriebliche Altersvorsorge an den Arbeitnehmer,
k) Eingeben einer Entscheidung über das Angebot durch den Arbeitnehmer in das zentrale Computersystem,
l) Dokumentieren der Entscheidung in dem zentralen Computersystem.

## Beschreibung

Die Erfindung betrifft ein Verfahren und eine Vorrichtung zum Vermitteln einer betrieblichen Altersvorsorge an Arbeitnehmer eines Unternehmens. Eine betriebliche Altersvorsorge bietet Arbeitnehmern eine zusätzliche Komponente der Altersabsicherung als Ergänzung der gesetzlichen Rentenversicherung und wird auch als Betriebsrente bezeichnet. Der Arbeitnehmer kann einen Teil seines Lohns als Beitrag zu der betrieblichen Altersvorsorge nutzen und erwirbt im Gegenzug Ansprüche auf Rentenzahlungen. Er profitiert dabei von steuerlichen Vorteilen. Das Unternehmen, das den Arbeitnehmer beschäftigt, muss diesem Vorgehen zustimmen und führt in der Regel den einzusetzenden Lohnanteil an eine Versicherung ab, die für die später an den Arbeitnehmer zu leistenden Zahlungen einsteht.

Obwohl eine solche betriebliche Altersvorsorge politisch erwünscht und wegen der genannten Steuervorteile für die meisten Arbeitnehmer sinnvoll ist, hat bislang nur ein relativ geringer Anteil der Arbeitnehmer eine betriebliche Altersvorsorge abgeschlossen.

Ein Grund hierfür ist, dass es sich bei der betrieblichen Altersvorsorge um ein besonders komplexes Versicherungsprodukt handelt, für das vielen Versicherungsvermittlern das notwendige Knowhow fehlt. Ein weiterer Grund ist, dass das Vermitteln einer betrieblichen Altersvorsorge für Versicherungsvermittler besonders aufwendig ist, weil sowohl der Arbeitnehmer als auch das den Arbeitnehmer beschäftigende Unternehmen in den Beratungs- und Entscheidungsprozess eingebunden werden müssen. Dies ist ein wichtiger Unterschied zu den meisten anderen Versicherungsprodukten, bei denen der Versicherungsnehmer unmittelbar mit dem Versicherer einen Vertrag schließen kann. Schließlich ist die Einbindung von Arbeitnehmer und Unternehmen nicht nur mit einem hohen organisatorischen Aufwand verbunden, sondern erfordert spezielle Sicherheitsmaßnahmen, um die sehr strengen Datenschutzanforderungen erfüllen zu können. Insbesondere der erforderlich Austausch von Lohndaten zwischen den Beteiligten ist diesbezüglich besonders kritisch.

Das Vermitteln einer betrieblichen Altersvorsorge wird daher weitgehend "von Hand" durchgeführt. Technische Hilfsmittel werden nur für allgemeine Verwaltungstätigkeiten eingesetzt oder zur Unterstützung der Beteiligten bei einzelnen Schutten, etwa zur Berechnung der Eckdaten eines Angebots. In der Regel werden nacheinander die folgenden Schritte ausgeführt: Als erstes nimmt ein Versicherungsvermittler Kontakt mit einem Unternehmen auf, dessen Arbeitnehmern eine betriebliche Altersvorsorge vermittelt werden könnte. Hierzu findet in der Regel ein persönliches Gespräch statt, in dem dem Unternehmen Informationen über die betriebliche Altersvorsorge gegeben werden. Im nächsten Schritt, in der Regel im Rahmen eines weiteren, persönlichen Gesprächs, wendet sich der Versicherungsvermittler an einen Arbeitnehmer des Unternehmens und informiert diesen ebenfalls über die grundsätzlichen Möglichkeiten einer betrieblichen Altersvorsorge. Ist der Arbeitnehmer an einem konkreten Angebot interessiert, muss er zunächst sein Einverständnis dafür geben, dass der Versicherungsvermittler die benötigten Lohndaten bei dem Unternehmen abfragt. Erst wenn dieses Einverständnis vorliegt, kann das Unternehmen dem Versicherungsvermittler die benötigten Daten zur Verfügung stellen und den Versicherungsvermittler damit in die Lage versetzen, ein konkretes Angebot für den betreffenden Arbeitnehmer zu berechnen. Dieses wird der Versicherungsvermittler dem Arbeitnehmer sodann vorstellen, in der Regel im Rahmen eines weiteren persönlichen Gesprächs. Nimmt der Arbeitnehmer das Angebot an - zumeist nach einer angemessenen Bedenkzeit von zum Beispiel zwei Wochen - teilt er dies dem Versicherungsvermittler mit, in der Regel in einem dritten persönlichen Gespräch. Anschließend muss der Versicherungsvermittler noch die Zustimmung des Unternehmens einholen, bevor er einen entsprechenden Vertrag mit einem Versicherungsunternehmen abschließen kann.

Davon ausgehend ist es die Aufgabe der Erfindung, ein Verfahren zur Verfügung zu stellen, das die Vermittlung einer betrieblichen Altersvorsorge an Arbeitnehmer eines Unternehmens vereinfacht, sodass ein Versicherungsvermittler mit geringerem Zeitaufwand einer Vielzahl von Arbeitnehmern eines Unternehmens eine betriebliche Altersvorsorge vermitteln kann, und zwar unter Einhaltung aller Datenschutzanforderungen und Erfüllung seiner Informations- und Dokumentationspflichten, sowie eine hierfür bestimmte Vorrichtung.

Diese Aufgabe wird gelöst durch das Verfahren zum Vermitteln einer betrieblichen Altersvorsorge an Arbeitnehmer eines Unternehmens mit den Schritten des Anspruchs 1. Vorteilhafte Ausgestaltungen sind in den sich anschließenden Unteransprüchen angegeben.

Das Verfahren weist die folgenden Schritte auf:
a) Erzeugen einer Datenstruktur mit Projektstammdaten über das Unternehmen auf einem zentralen Computersystem,
b) Erzeugen eines Softwareprogramms mit dem zentralen Computersystem, wobei das Softwareprogramm ein Eingabemodul und ein Verschlüsselungsmodul sowie die Projektstammdaten umfasst,
c) Übertragen des Softwareprogramms von dem zentralen Computersystem zu einem Computersystem des Unternehmens und Ausführen des Softwareprogramms auf dem Computersystem des Unternehmens,
d) Erfassen von persönlichen Daten über einen Arbeitnehmer einschließlich Lohndaten mit dem Eingabemodul,
e) Verschlüsseln vertraulicher Daten über den Arbeitnehmer mit dem Verschlüsselungsmodul und Erzeugen eines Datensatzes über den Arbeitnehmer, der einen unverschlüsselten Teil und einen verschlüsselten Teil enthält, sowie eines Schlüssels, mit dem der verschlüsselte Teil entschlüsselbar ist,
f) Übermitteln des Schlüssels an den Arbeitnehmer,
g) Übermitteln des Datensatzes an das zentrale Computersystem,
h) Übermitteln des Schlüssels an das zentrale Computersystem durch den Arbeitnehmer,
i) Entschlüsseln des verschlüsselten Teils des Datensatzes in dem zentralen Computersystem,
j) Übermitteln eines Angebots für eine betriebliche Altersvorsorge an den Arbeitnehmer,
k) Eingeben einer Entscheidung über das Angebot durch den Arbeitnehmer in das zentrale Computersystem,
l) Dokumentieren der Entscheidung in dem zentralen Computersystem.

Das zentrale Computersystem befindet sich in der Sphäre des Versicherungsvermittlers. Es kann einen einzelnen Computer oder Server aufweisen oder eine Vielzahl von miteinander vernetzten Rechnern. Auf dem zentralen Computersystem läuft ein Programm, mit dem der Versicherungsvermittler im Schritt a) Projektstammdaten über das Unternehmen erfasst und eine entsprechende Datenstruktur anlegt. Das Programm kann zum Beispiel ein CRM-System (*customer relationship management-System)* sein.

Die Projektstammdaten umfassen grundlegende Daten, die zur Durchführung des Vermittlungsprojekts bei dem Unternehmen erforderlich sind. Hierzu können eine Bezeichnung des Projekts, ein Firmenname des Unternehmens und/oder Informationen über die Abteilungen und/oder Standorte des Unternehmens zählen.

Im Schritt b) wird mit dem zentralen Computersystem ein Softwareprogramm erzeugt, das ein Eingabemodul, ein Verschlüsselungsmodul und die Projektstammdaten umfasst. Insbesondere kann dieses Softwareprogramm von dem auf dem zentralen Computersystem laufenden Programm, in das die Projektstammdaten eingegeben wurden, erzeugt werden. Das Softwareprogramm kann eine ausführbare Datei aufweisen, die auf einem gewöhnlichen Computersystem ausgeführt werden kann, ohne dass zuvor eine spezielle Software installiert werden muss. Alle genannten Elemente des Softwareprogramms können in diese ausführbare Datei integriert sein. Alternativ können weitere Dateien umfasst sein, mit denen die ausführbare Datei zusammenwirkt.

Im Schritt c) wird das Softwareprogramm von dem zentralen Computersystem zu einem Computersystem des Unternehmens übertragen und auf dem Computersystem des Unternehmens ausgeführt. Bei dem Computersystem des Unternehmens kann es sich ebenfalls um einen einzelnen Rechner oder um ein Computernetzwerk mit mehreren Rechnern handeln.

Mit Hilfe des auf dem Computersystem des Unternehmens laufenden Softwareprogramms werden dann im Schritt d) persönliche Daten über einen Arbeitnehmer einschließlich Lohndaten erfasst, und zwar mit dem Eingabemodul des Softwareprogramms. Es versteht sich, dass in diesem Schritt vorzugsweise die entsprechenden Daten mehrerer Arbeitnehmer des Unternehmens erfasst werden können, insbesondere aller Arbeitnehmer, denen eine betriebliche Altersvorsorge angeboten werden soll. Die persönlichen Daten über den Arbeitnehmer können zum Beispiel Namen, Anschrift und Geburtsdatum des Arbeitnehmers umfassen, darüber hinaus aber auch weitergehende Informationen zum Beispiel über die Stellung des Arbeitnehmers im Betrieb, einen Vorgesetzten des Arbeitnehmers und/oder steuerliche Daten wie beispielsweise eine Steuerklasse. Ebenfalls erfasst werden Lohndaten des Arbeitnehmers, insbesondere ein aktueller Bruttolohn. Wie bereits erwähnt, unterliegen diese Daten sehr strengen Datenschutzanforderungen und dürfen ohne vorheriges Einverständnis des Arbeitnehmers nicht an Dritte herausgegeben werden, insbesondere nicht an den Versicherungsvermittler.

Nachfolgend werden im Schritt e) vertrauliche Daten über den Arbeitnehmer, insbesondere die zuvor erfassten Lohndaten und gegebenenfalls ein Teil der erfassten persönlichen Daten, mit dem Verschlüsselungsmodul des Softwareprogramms verschlüsselt. Es wird ein Datensatz über den Arbeitnehmer erzeugt, der einen unverschlüsselten Teil und einen verschlüsselten Teil enthält. Außerdem wird ein Schlüssel erzeugt, mit dem der verschlüsselte Teil entschlüsselbar ist.

Der unverschlüsselte Teil des Datensatzes enthält lediglich Informationen, die keinen besonderen Datenschutzanforderungen unterliegen, etwa den Namen des Arbeitnehmers oder eine Personalnummer, anhand derer der Arbeitnehmer eindeutig identifiziert werden kann.

Die Schritte d) und e), für die die geheimhaltungsbedürftigen Daten benötigt werden, werden ausschließlich in der Sphäre des Unternehmens, nämlich auf dem Computersystem des Unternehmens, durchgeführt. Der vertrauliche Teil der Daten, insbesondere die Lohndaten, sind daher für Dritte nicht zugänglich, insbesondere nicht für den Versicherungsvermittler.

Im nächsten Schritt f) wird der Schlüssel, mit dem der verschlüsselte Teil der Daten entschlüsselt werden kann, an den Arbeitnehmer übermittelt.

In einem weiteren Schritt g) wird der Datensatz mit den Daten über den Arbeitnehmer an das zentrale Computersystem übertragen. Da die vertraulichen Daten in dem Datensatz verschlüsselt sind, bleibt gewährleistet, dass Dritte nicht auf die Daten zugreifen können. Anhand der enthaltenen, nicht verschlüsselten Daten kann der Versicherungsvermittler lediglich feststellen, welchen Arbeitnehmer ein an das zentrale Computersystem übertragener Datensatz betrifft. Alle für die Beratung dieses Arbeitnehmers erforderlichen Daten liegen dann auf dem zentralen Computersystem vor.

Erst nach dem weiteren Schritt h), in dem der Arbeitnehmer den Schlüssel an das zentrale Computersystem übermittelt, können die ihn betreffenden, vertraulichen Daten ausgewertet und für eine Beratung des Arbeitnehmers, insbesondere für das Vorlegen eines persönlichen Angebots, verwendet werden. Mit dem Übermitteln des Schlüssels gibt der Arbeitnehmer zugleich seine Zustimmung, dass seine Daten von dem Versicherungsvermittler zu diesem Zweck verwendet werden.

Im Schritt i) wird dann der verschlüsselte Teil des Datensatzes in dem zentralen Computersystem entschlüsselt, sodass im Schritt j) ein Angebot für eine betriebliche Altersvorsorge an den Arbeitnehmer übermittelt werden kann.

Nach Prüfung des Angebots kann der Arbeitnehmer im Schritt k) eine Entscheidung über das Angebot in das zentrale Computersystem eingeben. Insbesondere kann er das Angebot annehmen oder ablehnen.

Schließlich wird im Schritt l) die Entscheidung des Arbeitnehmers über das Angebot in dem zentralen Computersystem dokumentiert. Anhand dieser Dokumentation kann der Versicherungsvermittler nachvollziehen, wie die automatisierte Beratung des Arbeitnehmers verlaufen ist.

Es versteht sich, dass an den erläuterten Verfahrensschritten neben dem Arbeitnehmer weitere Personen beteiligt sein können, insbesondere ein Versicherungsvermittler, der den Schritt a) ausführt, und ein Mitarbeiter des Unternehmens, der im Schritt d) die Daten über den Arbeitnehmer erfasst. Diese Schritte können jedoch auch ganz oder teilweise automatisiert ablaufen. Soweit Personen beteiligt sind, können diese auf beliebigem Wege auf die jeweiligen Computersysteme zugreifen. Beispielsweise kann der Arbeitnehmer mit einem Web-Browser über das Internet auf einen Webserver des zentralen Computersystems zugreifen, insbesondere über eine gesicherte Verbindung.

Die Erfindung überwindet die eingangs genannten Schwierigkeiten durch eine Reihe technischer Maßnahmen. Über eine bloße Automatisierung der zuvor "von Hand" ausgeführten Schritte geht sie weit hinaus. Insbesondere wird mit dem Softwareprogramm, das auf dem Computersystem des Unternehmens ausgeführt wird, ein technisches Hilfsmittel zur Verfügung gestellt, das anhand einer besonderen Datenstruktur für eine sehr einfache Erfassung aller relevanten Daten über die Arbeitnehmer des Unternehmens geeignet ist.

Durch die Verlagerung dieser Datenerfassung in die Sphäre des Unternehmens kann die Datenerfassung ohne vorherige Einverständniserklärung der betroffenen Arbeitnehmer erfolgen. Durch die Verschlüsselung, ebenfalls noch in der Sphäre des Unternehmens, können die später benötigten Daten ebenfalls noch unabhängig von dem Einverständnis der betroffenen Arbeitnehmer in die Sphäre des Versicherungsvermittlers, nämlich an das zentrale Computersystem, übermittelt werden.

Soweit jetzt und im Folgenden von der Sphäre des Versicherungsvermittlers und einem Versicherungsvermittler die Rede ist, ist auch daran gedacht, dass die Rolle des Vermittlers von einem Versicherungsunternehmen erfüllt wird. In diesem Fall kann sich das zentrale Computersystem dementsprechend in der Sphäre des Versicherungsunternehmens befinden.

Das erfindungsgemäße Verfahren vereinfacht das Vermitteln der betrieblichen Altersvorsorge an eine Vielzahl von Arbeitnehmern in offensichtlicher Weise für den Vermittler, der insbesondere von dem Einholen des Einverständnisses des Arbeitnehmers mit dem Zugriff auf seine vertraulichen Daten entlastet ist. Darüber hinaus ist es von erheblichem Vorteil, dass die erforderliche Mitwirkung des Arbeitnehmers ebenfalls auf ein Mindestmaß reduziert wird. Insbesondere kann der Arbeitnehmer in einem einzigen, automatisierten Beratungsvorgang sowohl grundlegende Informationen über die betriebliche Altersvorsorge erhalten, als auch sofort ein individuelles Angebot.

In einer Ausgestaltung umfasst ein Erstellen des Angebots für die betriebliche Altersvorsorge folgende Schritte:
m) Vorgeben eines Nettobeitrags des Arbeitnehmers,
n) Berechnen eines Bruttobeitrags für die betriebliche Altersvorsorge auf Grundlage der Lohndaten und des Nettobeitrags unter Berücksichtigung von Steuern und Sozialversicherungsabgaben,
o) Berechnen einer Versicherungsleistung auf Grundlage des Bruttobeitrags und der persönlichen Daten des Arbeitnehmers.

Somit wird auf Grundlage eines Nettobeitrags, den der Arbeitnehmer zu leisten bereit ist, unter Berücksichtigung der Lohndaten und zu leistenden Abgaben des Arbeitnehmers ermittelt, welche Versicherungsleistung, d.h. welche Altersrente, sich für den Arbeitnehmer ergibt. Es versteht sich, dass auf diese Weise mehrerer Angebote erstellt werden können, beispielsweise gleich für mehrere denkbare Nettobeiträge von zum Beispiel € 20,--, € 30,--, € 50,-- und € 75,-- pro Monat. In jedem Fall wird ein für den Arbeitnehmer aussagekräftiges Angebot zur Verfügung gestellt.

In einer Ausgestaltung werden die Schritte n) und o) von dem Computersystem des Unternehmens durchgeführt. Hierzu kann insbesondere das Softwareprogramm, das auf diesem Computersystem ausgeführt wird, zusätzlich zu dem Eingabemodul und dem Verschlüsselungsmodul ein Berechnungsmodul zur Ausführung der genannten Schritte aufweisen. In diesem Fall werden die für das Angebot maßgeblichen, dem Arbeitnehmer zu präsentierenden Daten in den Datensatz über den Arbeitnehmer, der später an das zentrale Computersystem übertragen wird, integriert. Während der automatisierten Beratung kann das Angebot dann sofort präsentiert werden, ohne dass es hierzu einer weitergehenden Berechnung bedarf. Alternativ können die genannten Schritte auch auf dem zentralen Computersystem ausgeführt werden. Dann ist es insbesondere möglich, dass der Arbeitnehmer selbst einen gewünschten Nettobeitrag vorgibt, für den dann während seiner Beratung ein konkretes Angebot erstellt wird.

In einer Ausgestaltung erhält der Arbeitnehmer von dem zentralen Computersystem Informationen über die betriebliche Altersvorsorge und bestätigt den Erhalt dieser Informationen, wobei die Bestätigung im Schritt l) dokumentiert wird. Auf diese Weise werden die Informationspflichten von Unternehmen und/oder Vermittler während der automatisierten Beratung automatisch erfüllt und die Erfüllung dieser Verpflichtung wird dokumentiert.

In einer Ausgestaltung werden die Informationen über die betriebliche Altersvorsorge in Form von Videosequenzen vermittelt, die von dem zentralen Computersystem zur Verfügung gestellt werden. Hier ist beispielsweise daran gedacht, dass sich ein Vorgesetzter des Arbeitnehmers in dem Video direkt an den Arbeitnehmer wendet und diesen anspricht. Auf diese Weise gelingt eine besonders ansprechende und persönlich wirkende Vermittlung der Informationen.

In einer Ausgestaltung weist das Eingabemodul eine Schnittstelle zu einem Lohnbuchhaltungsprogramm des Unternehmens auf und das Erfassen der Lohndaten im Schritt d) erfolgt automatisch über diese Schnittstelle. Bei dem Lohnbuchhaltungsprogramm kann es sich beispielsweise um ein SAP-System handeln, das von dem Unternehmen eingesetzt wird und in dem alle benötigten Daten über die Arbeitnehmer verfügbar sind. Durch die Verwendung einer automatischen Schnittstelle vereinfacht sich der Arbeitsaufwand für das Unternehmen erheblich, insbesondere wenn eine Vielzahl von Arbeitnehmern einbezogen werden soll.

In einer Ausgestaltung wird der in Schritt f) übermittelte Schlüssel von dem Computersystem des Unternehmens ausgedruckt und der Ausdruck wird einer Lohnabrechnung des Arbeitnehmers beigefügt. Auf diese Weise wird sichergestellt, dass der Arbeitnehmer den Schlüssel erhält und dass dabei die Datenschutzanforderungen eingehalten werden, wie beim Versand der Lohnabrechnung üblich.

In einer Ausgestaltung stimmt der Arbeitnehmer im Schritt k) dem Abschluss einer betrieblichen Altersvorsorge zu und anschließend wird mindestens einer der folgenden Schritte ausgeführt:
p) Erzeugen eines Datensatzes mit buchhaltungsrelevanten Informationen über die abgeschlossene betriebliche Altersvorsorge und Übermitteln dieses Datensatzes an das Computersystem des Unternehmens,
q) Erzeugen eines Datensatzes mit versicherungsrelevanten Informationen über die abgeschlossene betriebliche Altersvorsorge und automatisches Übermitteln dieses Datensatzes an ein Computersystem eines Versicherungskonzerns,
r) Erzeugen eines Datensatzes mit vermittlerrelevanten Informationen über die abgeschlossene betriebliche Altersvorsorge und automatisches Übermitteln dieses Datensatzes an ein Computersystem eines Versicherungsvermittlers,
s) Erzeugen eines Datensatzes mit arbeitnehmerrelevanten Informationen über die abgeschlossene betriebliche Altersvorsorge und automatisches Übermitteln dieses Datensatzes an den Arbeitnehmer.

Die Schritte p) bis s) können jeweils von dem zentralen Computersystem ausgeführt werden. Durch jeden der Schritte wird ein Teil der nach Abschluss einer betrieblichen Altersvorsorge erforderlichen Maßnahmen automatisiert. Alle beteiligten Personen bzw. Unternehmen können automatisch mit den für sie relevanten Daten versorgt werden. Es versteht sich, dass die erzeugten Datensätze gegebenenfalls wiederum in verschlüsselter Form übermittelt werden können.

In einer Ausgestaltung wird der Datensatz mit den arbeitnehmerrelevanten Informationen unter Verwendung des Schlüssels verschlüsselt und automatisch elektronisch an den Arbeitnehmer übermittelt. Dadurch werden die Datenschutzanforderungen eingehalten, ohne dass erneut ein Schlüssel erzeugt und übermittelt werden muss. Der Arbeitnehmer kann die für ihn bedeutsamen Informationen sofort einsehen, indem er den zuvor verwendeten Schlüssel nochmals einsetzt.

In einer Ausgestaltung wird der Datensatz mit den arbeitnehmerrelevanten Informationen zum Erstellen eines Dokuments, in dem diese Informationen dargestellt sind, verwendet, und dieses Dokument wird automatisch an den Arbeitnehmer versandt.

Auf diese Weise erhält der Arbeitnehmer die ihn betreffenden Informationen in Papierform, wobei ebenfalls die Datenschutzanforderungen durch den Dokumentenversand erfüllt werden können.

In einer Ausgestaltung lehnt der Arbeitnehmer im Schritt k) den Abschluss einer betrieblichen Altersvorsorge ab und anschließend wird automatisch eine Information über diese Entscheidung des Arbeitnehmers an das Computersystem des Unternehmens übermittelt. Dadurch kann das Unternehmen jederzeit feststellen, dass ein Arbeitnehmer an der Beratung zur betrieblichen Altersvorsorge teilgenommen hat, auch wenn es nicht zum Abschluss einer solchen gekommen ist.

In einer Ausgestaltung enthält der im Schritt g) übermittelte Datensatz Vorgaben des Unternehmens über die betriebliche Altersvorsorge, in deren Rahmen das Unternehmen dem Abschluss einer betrieblichen Altersvorsorge zustimmt. Diese Vorgaben können von dem Unternehmen beim Erfassen der persönlichen Daten über den Arbeitnehmer im Schritt d) eingegeben werden. Alternativ können die Vorgaben bereits in den Projektstammdaten enthalten sein und insbesondere durch den Versicherungsvermittler, ggf. nach Absprache mit dem Unternehmen, eingegeben worden sein. Die Vorgaben können beispielsweise einen Mindestbetrag und einen Höchstbetrag für den für die betriebliche Altersvorsorge einzusetzenden Bruttolohn enthalten. Die nachfolgend erstellten Angebote können sich dann automatisch in diesem Rahmen halten. Der besondere Vorteil besteht darin, dass dem Arbeitnehmer zum Zeitpunkt eines Angebots die Zustimmung des Unternehmens zum Abschluss einer betrieblichen Altersvorsorge zu diesem Angebot bereits vorliegt, sodass der Arbeitnehmer tatsächlich durch Annehmen des Angebots die gewünschte betriebliche Altersvorsorge unmittelbar abschließen kann. Daraus ergibt sich eine weitere Vereinfachung des Verfahrens mit einem reduzierten Bearbeitungsaufwand auf Seiten des Vermittlers und des Unternehmens, da keine nachträgliche Zustimmung zu den Wünschen eines Arbeitnehmers mehr eingeholt bzw. gegeben werden muss.

Die oben genannte Aufgabe wird ebenfalls gelöst durch die Vorrichtung zum Vermitteln einer betrieblichen Altersvorsorge an Arbeitnehmer eines Unternehmens mit den Merkmalen des Anspruchs 13. Vorteilhafte Ausgestaltungen sind in dem sich anschließenden Unteranspruch angegeben.

Die Vorrichtung dient zum Vermitteln einer betrieblichen Altersvorsorge an Arbeitnehmer eines Unternehmens, wobei die Vorrichtung ein zentrales Computersystem und ein dem Unternehmen zugeordnetes Computersystem aufweist und zur Ausführung des Verfahrens nach Anspruch 1 die folgenden Merkmale aufweist:
a) das zentrale Computersystem ist dazu eingerichtet, eine Datenstruktur mit Projektstammdaten über das Unternehmen zu erzeugen,
b) das zentrale Computersystem ist dazu eingerichtet, ein Softwareprogramm zu erzeugen, das ein Eingabemodul und ein Verschlüsselungsmodul sowie die Projektstammdaten umfasst,
c) die Vorrichtung ist dazu eingerichtet, das Softwareprogramms von dem zentralen Computersystem zu dem Computersystem des Unternehmens zu übertragen und das Softwareprogramms auf dem Computersystem des Unternehmens auszuführen,
d) das Eingabemodul ist dazu eingerichtet, persönliche Daten über einen Arbeitnehmer einschließlich Lohndaten zu erfassen,
e) das Verschlüsselungsmodul ist dazu eingerichtet, vertrauliche Daten über den Arbeitnehmer zu verschlüsseln und einen Datensatz über den Arbeitnehmer zu erzeugen, der einen unverschlüsselten Teil und einen verschlüsselten Teil enthält, sowie einen Schlüssel zu erzeugen, mit dem der verschlüsselte Teil entschlüsselbar ist,
f) die Vorrichtung ist dazu eingerichtet, den Schlüssel an den Arbeitnehmer zu übermitteln,
g) die Vorrichtung ist dazu eingerichtet, den Datensatz an das zentrale Computersystem zu übermitteln,
h) die Vorrichtung ist zum Übermitteln des Schlüssels an das zentrale Computersystem durch den Arbeitnehmer eingerichtet,
i) das zentrale Computersystem ist dazu eingerichtet, den verschlüsselten Teils des Datensatzes zu entschlüsseln,
j) die Vorrichtung ist dazu eingerichtet, ein Angebot für eine betriebliche Altersvorsorge an den Arbeitnehmer zu übermitteln,
k) das zentrale Computersystem ist zum Eingeben einer Entscheidung über das Angebot durch den Arbeitnehmer eingerichtet, und
l) das zentrale Computersystem ist dazu eingerichtet, die Entscheidung zu dokumentieren.

Die Einrichtung der Vorrichtung, des zentralen Computersystems oder des Computersystems zur Ausführung der genannten Schritte kann jeweils in einer entsprechenden Programmierung zum Ausdruck kommen. Zur Erläuterung der Merkmale der Vorrichtung und der besonderen Vorteile wird auf die vorstehenden Erläuterungen der korrespondierenden Verfahrensmerkmale verwiesen.

In weiteren Ausgestaltungen ist die Vorrichtung zur Ausführung eines Verfahrens nach einem der Ansprüche 2 bis 12 eingerichtet. Damit ist insbesondere gemeint, dass die Vorrichtung, das zentrale Computersystem und/oder das Computersystem des Unternehmens zur Ausführung entsprechend ausgestalteter Schritte eingerichtet ist.

Nachfolgend wird die Erfindung anhand von in Figuren dargestellten Ausführungsbeispielen näher erläutert.
Fig. 1 zeigt eine schematische Darstellung zu den zentralen Verfahrensschritten mit den beteiligten Personen und Computersystemen.
Fig. 2 zeigt in den zusammengehörigen Teilen a) bis f) ein detailliertes Flussdiagramm zum Ablauf des Verfahrens in einem Ausführungsbeispiel.

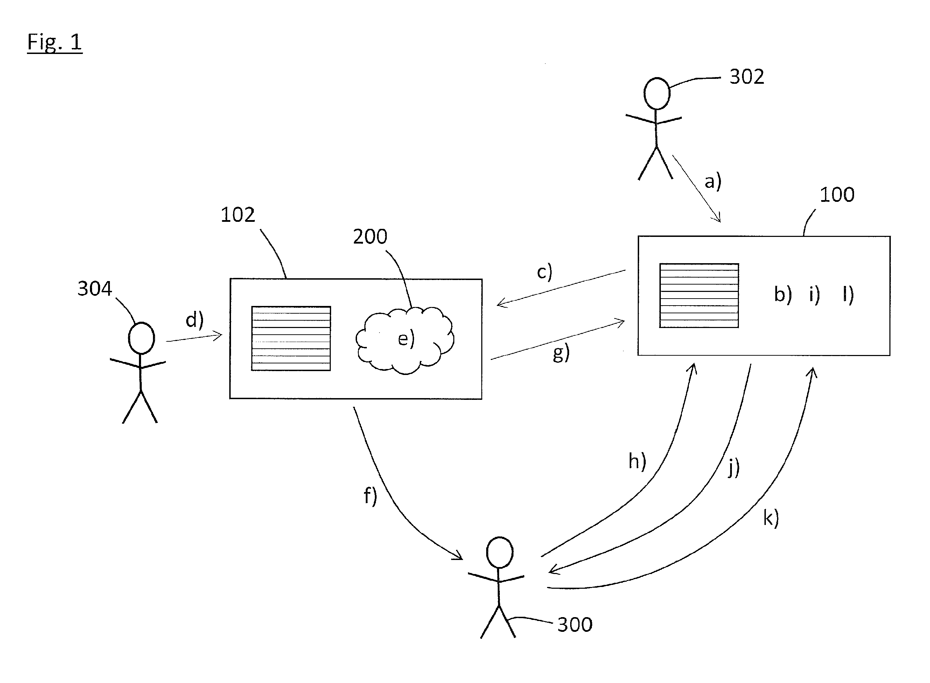

Figur 1 zeigt einen Versicherungsvermittler 302, der im Schritt a) auf einem zentralen Computersystem 100, das sich in der Sphäre des Versicherungsvermittlers befindet und auf das er beispielsweise über ein Web-Interface zugreift, eine Datenstruktur mit Projektstammdaten über ein Unternehmen erzeugt, das gemeinsam mit ihm eine betriebliche Altersvorsorge an seine Arbeitnehmer vermitteln möchte. Hierzu gibt der Versicherungsvermittler 302 nach Maßgabe einer auf dem zentralen Computersystem 100 laufenden Software, beispielsweise ein CRM-System, einen Projektnamen, einen Namen des Unternehmens sowie Informationen über Standorte und Abteilungen des Unternehmens ein.

Anschließend erzeugt das zentrale Computersystem 100 im Schritt b) ein Softwareprogramm 200, das ein Eingabemodul und ein Verschlüsselungsmodul sowie die Projektstammdaten umfasst.

Im Schritt c) wird das Softwareprogramm von dem zentralen Computersystem 100 zu einem Computersystem 102 des Unternehmens übertragen und dort ausgeführt.

Anschließend erfasst ein Mitarbeiter 304 des Unternehmens, beispielsweise aus der Buchhaltung, im Schritt d) persönliche Daten über einen Arbeitnehmer 300 einschließlich Lohndaten. Hierzu verwendet er ein Eingabemodul der Software 200.

Im Schritt e) verschlüsselt das Verschlüsselungsmodul der Software 200 vertrauliche Daten über den Arbeitnehmer 300 und erzeugt einen Datensatz über den Arbeitnehmer 300, der einen unverschlüsselten Teil und einen verschlüsselten Teil enthält.

Ein ebenfalls von dem Verschlüsselungsmodul erzeugter Schlüssel 104, mit dem der verschlüsselte Teil des Datensatzes entschlüsselbar ist, wird im Schritt f) an den Arbeitnehmer 300 übermittelt. Es versteht sich, dass sämtliche Schritte immer gleich für eine Vielzahl von Arbeitnehmern 300 ausgeführt werden können, insbesondere für alle Arbeitnehmer des Unternehmens, denen eine betriebliche Altersvorsorge vermittelt werden soll.

Im Schritt g) wird der Datensatz an das zentrale Computersystem 100 übermittelt.

Wenn der Arbeitnehmer 300 sich über die betriebliche Altersvorsorge informieren möchte, gibt er im Schritt h) seinen Schlüssel ein, beispielsweise indem er ihn über ein Web-Interface an das zentrale Computersystem 100 übermittelt.

Daraufhin entschlüsselt das zentrale Computersystem 100 im Schritt i) den verschlüsselten Teil des Datensatzes über den Arbeitnehmer 300 in dem zentralen Computersystem 100.

Im Schritt j) übermittelt das zentrale Computersystem 100 ein persönliches Angebot für eine betriebliche Altersvorsorge an den Arbeitnehmer 300. Dieses Übermitteln des Angebots kann beispielsweise durch Anzeigen des Angebots in einem Web-Browser, über den der Arbeitnehmer 300 auf das zentrale Computersystem 100 zugreift, erfolgen, insbesondere über eine gesicherte Verbindung.

Nach Prüfen des Angebots kann der Arbeitnehmer 300 im Schritt k) eine Entscheidung über das Angebot in das zentrale Computersystem 100 eingeben.

Nachfolgend wird seine Entscheidung in dem zentralen Computersystem 100 im Schritt l.) dokumentiert.

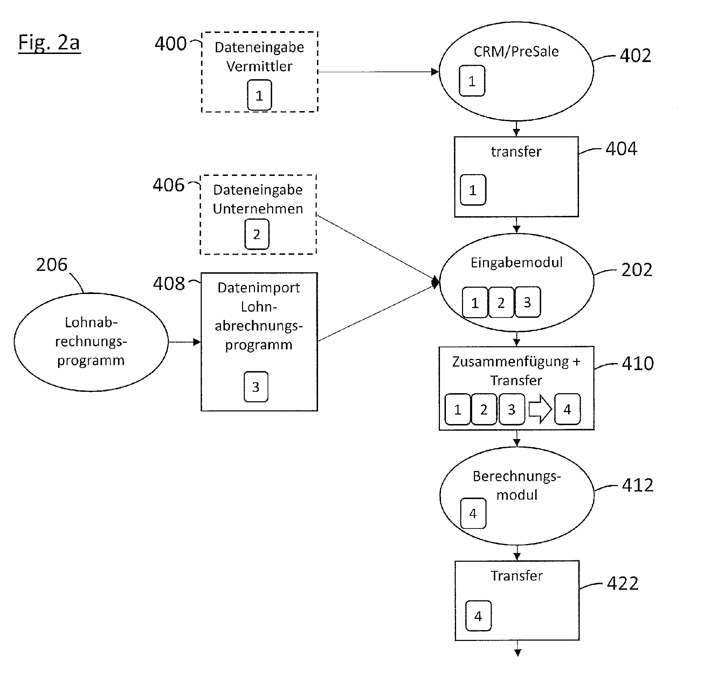

Einzelheiten des erläuterten Verfahrens werden anhand der detaillierteren Darstellungen der Figuren 2a bis 2f genauer verständlich. In dem Flussdiagramm kennzeichnen kleine Kästchen mit abgerundeten Ecken virtuelle Datenpakete. Rechtecke mit gestrichelten Umfangslinien bezeichnen Dateneingabeschritte. Rechtecke mit gepunkteten Umfangslinien stehen für Datenausgaben. Ovale Elemente beschreiben Software- oder Hardwarekomponenten. Rechtecke mit durchgezogenen Linien stehen für Verfahrensschritte.

Das Verfahren beginnt in Figur 2a oben links mit dem Schritt 400, in dem ein Versicherungsvermittler Projektstammdaten 1 eingibt. Dies geschieht mit Hilfe eines PreSale-Moduls 402 eines CRM-Systems, also mit einer Softwarekomponente, die auf dem zentralen Computersystem 100 läuft. Das PreSale-Modul 402 erzeugt dann das bereits erläuterte Softwareprogramm 200, das im Schritt 404 an das Computersystem 102 des Unternehmens übertragen wird.

Dort wird das Softwareprogramm 200 ausgeführt, wobei zuerst das Eingabemodul 202 des Softwareprogramms 200 eingesetzt wird. Mit Hilfe dieses Eingabemoduls 202 erfolgt bei 406 eine Dateneingabe durch das Unternehmen, und zwar von persönlichen Daten 2 über die Arbeitnehmer 300, beispielsweise enthaltend Namen, Geburtsdaten und Angaben zur Stellung im Betrieb sowie zu den Vorgesetzten.

Ebenfalls mit Hilfe des Eingabemoduls 202 erfolgt im Schritt 408 ein Erfassen von Lohndaten 3, und zwar im gezeigten Beispiel durch einen Datenimport aus einem Lohnabrechnungsprogramm 206 über eine hierfür bestimmte Schnittstelle des Softwareprogramms 200.

Im Schritt 410 werden dann die Daten 1, 2, 3 zusammengefügt, sodass ein umfassender Datensatz 4 entsteht. Dieser Datensatz 4 wird an ein Berechnungsmodul 412 des Softwareprogramms 200 übertragen. Das Berechnungsmodul 412 umfasst weitere Untereinheiten 414, 416, 418 und 420, in denen der Datensatz 4 um weitere Informationen angereichert wird.

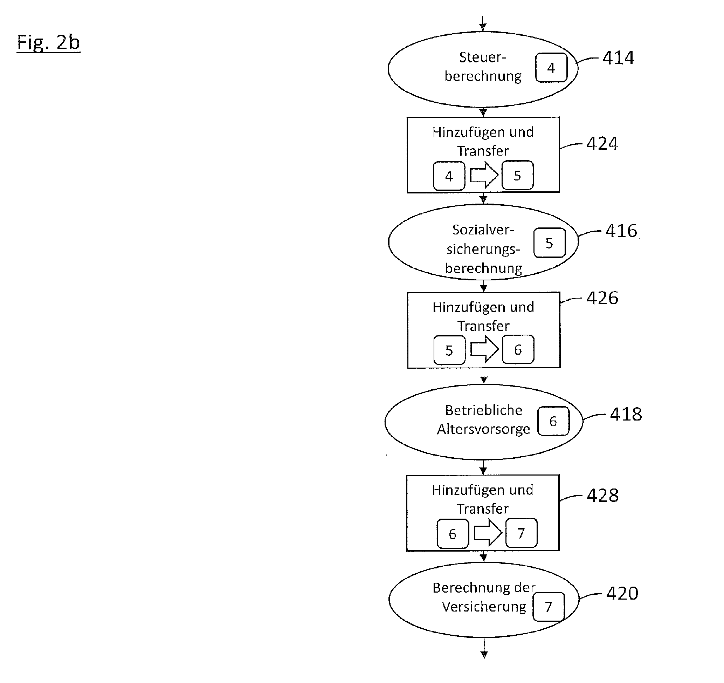

Hierzu wird zunächst der Datensatz 4 im Schritt 422 an die Untereinheit 414 zur Steuerberechnung übertragen. Die Untereinheit 414 zur Steuerberechnung (siehe Fig. 2b) ermittelt für den jeweiligen Arbeitnehmer 300 ausgehend von dem in dem Datensatz 4 enthaltenen Bruttolohn individuelle Steueranteile, die im Schritt 424 zu dem Datensatz 4 hinzugefügt werden, sodass ein umfassenderer Datensatz 5 entsteht. Dieser wird ebenfalls noch im Schritt 424 an die Untereinheit 416 zur Sozialversicherungsberechnung übermittelt, in der individuelle Sozialabgaben berechnet werden. Im Schritt 426 werden diese dem Datensatz 5 hinzugefügt, sodass ein nochmals angereicherter Datensatz 6 entsteht, der im Schritt 426 an die Untereinheit 418 "Betriebliche Altersvorsorge" übermittelt wird.

In der Untereinheit 418 "Betriebliche Altersvorsorge" wird für einen vorgegebenen Nettobeitrag, den der Arbeitnehmer 300 einsetzen könnte, ein Bruttobeitrag für die betriebliche Altersvorsorge berechnet. Dieser wird im Schritt 428 dem Datensatz 6 hinzugefügt, sodass ein nochmals angereicherter Datensatz 7 entsteht, der an die Untereinheit 420 zur Berechnung der Versicherung übermittelt wird.

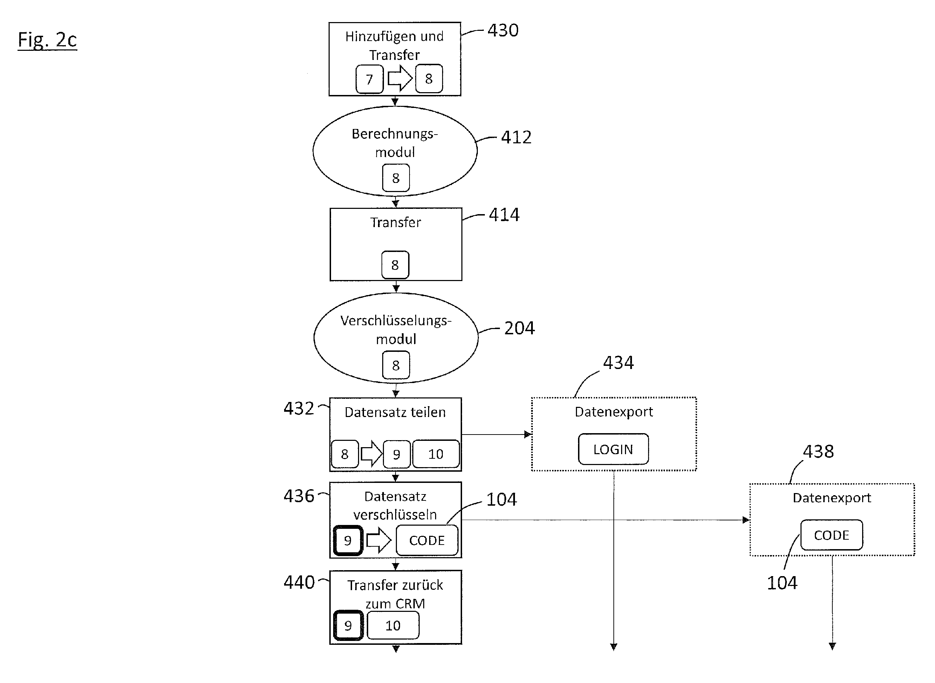

Die Untereinheit 420 zur Berechnung der Versicherung berechnet auf Grundlage des Bruttobeitrags und weiterer persönlicher Daten über den Arbeitnehmer 300, insbesondere seines Geburtsdatums, die spätere Versicherungsleistung. Diese wird im Schritt 430 (siehe Fig. 2c) dem Datensatz 7 hinzugefügt, sodass der Datensatz 8 über den Arbeitnehmer 300 entsteht. Der Datensatz 8 wird dann vom Berechnungsmodul 412 des Softwareprogramms 200 im Schritt 414 an das Verschlüsselungsmodul 204 des Softwareprogramms 200 übergeben.

Von dem Verschlüsselungsmodul 204 wird der Datensatz 8 aufgeteilt in einen Teil 9 mit vertraulichen Daten und einen Teil 10. Dies geschieht im Schritt 432. Parallel erfolgt im Schritt 434 ein Export von Login-Daten, mit denen sich der Arbeitnehmer 300 später am zentralen Computersystem 100 anmelden kann.

Im Schritt 436 verschlüsselt das Verschlüsselungsmodul 204 die vertraulichen Daten über den Arbeitnehmer, sodass ein verschlüsselter Teil 9 des Datensatzes 8 entsteht, außerdem ein Schlüssel 104. Die Datenpakete mit den verschlüsselten Daten sind jetzt und im Folgenden mit einer fetten Umrandungslinie dargestellt.

Im parallel ausgeführten Schritt 438 exportiert das Verschlüsselungsmodul 206 den Schlüssel 104.

Im Schritt 440 wird der verschlüsselte Teil 9 und der unverschlüsselte Teil 10 des Datensatzes über den Arbeitnehmer 300 an das PreSale-Modul 402 des CRM-Systems zurückübertragen.

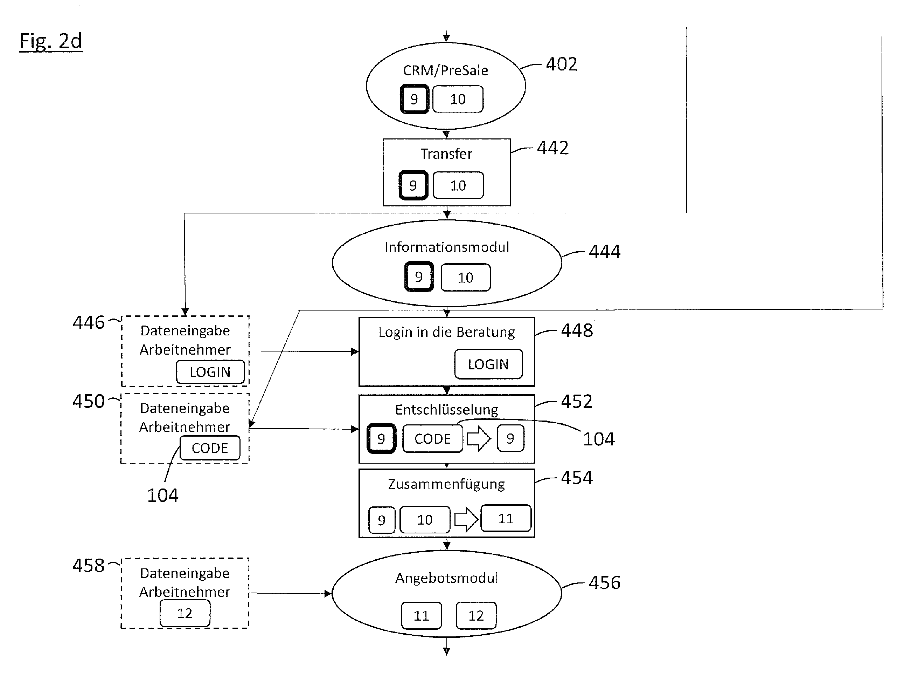

Im Schritt 442 (siehe Fig. 2d) wird der verschlüsselte Teil 9 und der unverschlüsselte Teil 10 des Datensatzes an das Informationsmodul 444 des CRM-Systems, das ebenfalls auf dem zentralen Computersystem 100 läuft, übergeben.

Im Schritt 446 gibt der Arbeitnehmer 300 seien Login-Daten in das zentrale Computersystem 100 ein, insbesondere über ein Web-Interface, sodass im Schritt 448 die Anmeldung für den automatisierten Beratungsprozess stattfinden kann.

Im Schritt 450 gibt der Arbeitnehmer 300 außerdem den Schlüssel 104 ein, sodass im Schritt 452 der verschlüsselte Teil 9 des Datensatzes mit Hilfe des Schlüssels 104 entschlüsselt werden kann und anschließend in lesbarer Form vorliegt.

Im sich anschließenden Schritt 454 werden die wieder entschlüsselten, vertraulichen Informationen (Datenpaket weiterhin bezeichnet als 9) mit dem unverschlüsselten Teil 10 des Datensatzes zu einem neuen Datensatz 11 über den Arbeitnehmer 300 zusammengefügt. Der Datensatz 11 wird an das Angebotsmodul 456 des CRM-Systems, das ebenfalls auf dem zentralen Computersystem 100 läuft, übermittelt. Im Schritt 458 gibt der Arbeitnehmer 300 weitere Daten ein, beispielsweise trifft er eine Auswahl eines einzusetzenden Nettobeitrags.

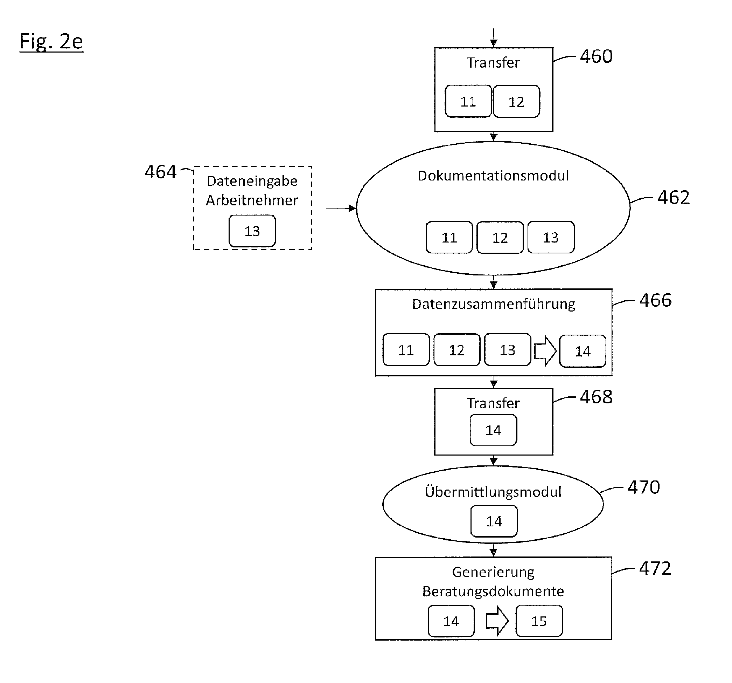

Der Datensatz 11 und die neu eingegebenen Daten 12 werden im Schritt 460 an das Dokumentationsmodul 462 des CRM-Systems (siehe Fig. 2e), das ebenfalls auf dem zentralen Computersystem 100 läuft, übertragen. Im Schritt 464 nimmt der Arbeitnehmer 300 eine weitere Dateneingabe vor. Insbesondere kann er zu diesem Zeitpunkt dem Angebot zustimmen, was im Beispiel erfolgt und durch das Datenpaket 13 dargestellt ist.

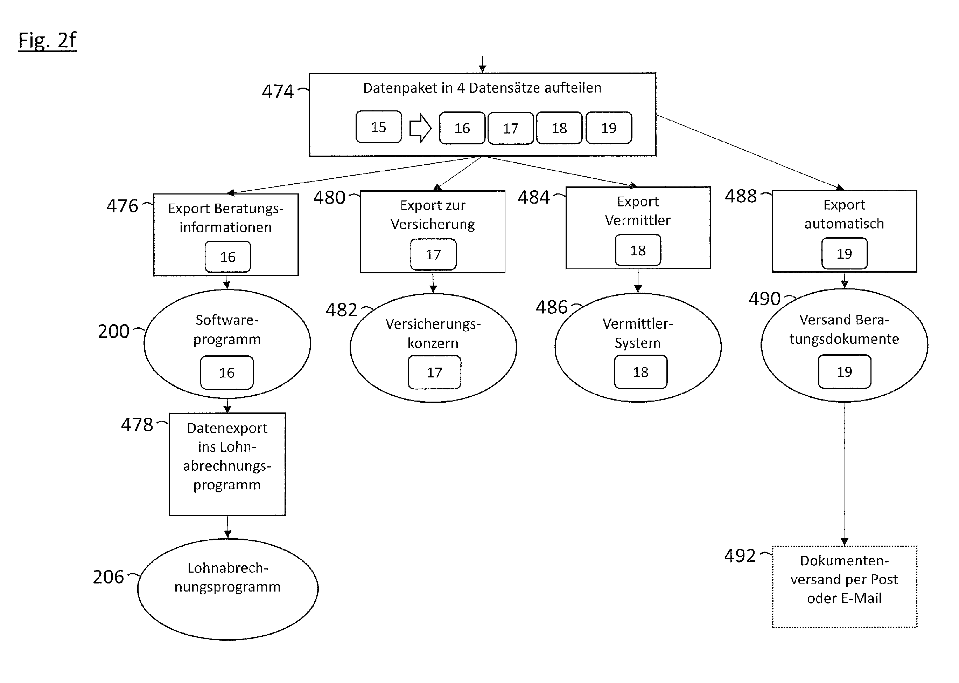

Im Schritt 466 werden die erhobenen Daten zu einem neuen Datenpaket 14 zusammengeführt und nachfolgend im Schritt 468 an das Übermittlungsmodul 470 des CRM-Systems, das ebenfalls auf dem zentralen Computersystem 100 läuft, übermittelt. Das Übermittlungsmodul 470 erzeugt im Schritt 472 auf Grundlage des Datensatzes 14 unterschiedliche Beratungsdokumente 15. Davon ausgehend werden im Schritt 474 (siehe Figur 2f) vier unterschiedliche Datensätze erstellt.

Der Datensatz 16 enthält buchhaltungsrelevante Informationen und wird im Schritt 476 automatisch zu dem Softwareprogramm 200 exportiert, wo im nachfolgenden Schritt 478 ein automatischer Datenexport in das Lohnabrechnungsprogramm 206 erfolgt.

Der Datensatz 17 enthält versicherungsrelevante Informationen über die abgeschlossene betriebliche Altersvorsorge und wird im Schritt 480 automatisch an ein Computersystem 482 eines Versicherungskonzerns exportiert.

Im Schritt 484 wird der Datensatz 18, der vermittlerrelevante Informationen über die abgeschlossene betriebliche Altersvorsorge enthält, automatisch an ein Computersystem 486 des Versicherungsvermittlers exportiert.

Im Schritt 488 wird der Datensatz 19, der arbeitnehmerrelevante Informationen über die abgeschlossene betriebliche Altersvorsorge enthält, automatisch an den Arbeitnehmer 300 übermittelt. Hierzu erfolgt ein Export der genannten Daten an eine Dokumentenversandeinrichtung 490, die ein entsprechendes Dokument erstellt und im Schritt 492 zum Beispiel per Post an den Arbeitnehmer 300 versendet.

## Patentansprüche

1. Verfahren zum Vermitteln einer betrieblichen Altersvorsorge an Arbeitnehmer eines Unternehmens, wobei das Verfahren die folgenden Schritte aufweist:
a) Erzeugen einer Datenstruktur mit Projektstammdaten (1) über das Unternehmen auf einem zentralen Computersystem (100),
b) Erzeugen eines Softwareprogramms (200) mit dem zentralen Computersystem (100), wobei das Softwareprogramm (200) ein Eingabemodul (202) und ein Verschlüsselungsmodul (204) sowie die Projektstammdaten (1) umfasst,
c) Übertragen des Softwareprogramms (200) von dem zentralen Computersystem (100) zu einem Computersystem (102) des Unternehmens und Ausführen des Softwareprogramms (200) auf dem Computersystem (102) des Unternehmens,
d) Erfassen von persönlichen Daten (2) über einen Arbeitnehmer (300) einschließlich Lohndaten (3) mit dem Eingabemodul (202),
e) Verschlüsseln vertraulicher Daten über den Arbeitnehmer (300) mit dem Verschlüsselungsmodul (204) und Erzeugen eines Datensatzes über den Arbeitnehmer (300), der einen unverschlüsselten Teil (10) und einen verschlüsselten Teil (9) enthält, sowie eines Schlüssels (104), mit dem der verschlüsselte Teil (9) entschlüsselbar ist,
f) Übermitteln des Schlüssels (104) an den Arbeitnehmer (300),
g) Übermitteln des Datensatzes an das zentrale Computersystem (100),
h) Übermitteln des Schlüssels (104) an das zentrale Computersystem (100) durch den Arbeitnehmer (300),
i) Entschlüsseln des verschlüsselten Teils (9) des Datensatzes in dem zentralen Computersystem (100),
j) Übermitteln eines Angebots für eine betriebliche Altersvorsorge an den Arbeitnehmer (300),
k) Eingeben einer Entscheidung über das Angebot durch den Arbeitnehmer (300) in das zentrale Computersystem (100),
l) Dokumentieren der Entscheidung in dem zentralen Computersystem (100).

2. Verfahren nach Anspruch 1, **dadurch gekennzeichnet, dass** ein Erstellen des Angebots für die betriebliche Altersvorsorge folgende Schritte umfasst:
m) Vorgeben eines Nettobeitrags des Arbeitnehmers (300),
n) Berechnen eines Bruttobeitrags für die betriebliche Altersvorsorge auf Grundlage der Lohndaten (3) und des Nettobeitrags unter Berücksichtigung von Steuern und Sozialversicherungsabgaben,
o) Berechnen einer Versicherungsleistung auf Grundlage des Bruttobeitrags und der persönlichen Daten (2) des Arbeitnehmers (300).

3. Verfahren nach Anspruch 1 oder 2, **dadurch gekennzeichnet, dass** die Schritte n) und o) von dem Computersystem (102) des Unternehmens durchgeführt werden.

4. Verfahren nach einem der Ansprüche 1 bis 3, **dadurch gekennzeichnet, dass** der Arbeitnehmer (300) von dem zentralen Computersystem (100) Informationen über die betriebliche Altersvorsorge erhält und den Erhalt dieser Informationen bestätigt, wobei die Bestätigung im Schritt l) dokumentiert wird.

5. Verfahren nach Anspruch 4, **dadurch gekennzeichnet, dass** die Informationen über die betriebliche Altersvorsorge in Form von Videosequenzen vermittelt werden, die von dem zentralen Computersystem (100) zur Verfügung gestellt werden.

6. Verfahren nach einem der Ansprüche 1 bis 5, **dadurch gekennzeichnet, dass** das Eingabemodul (202) eine Schnittstelle zu einem Lohnbuchhaltungsprogramm (206) des Unternehmens aufweist und das Erfassen der Lohndaten (3) im Schritt d) automatisch über diese Schnittstelle erfolgt.

7. Verfahren nach einem der Ansprüche 1 bis 6, **dadurch gekennzeichnet, dass** der in Schritt f) übermittelte Schlüssel von dem Computersystem (102) des Unternehmens ausgedruckt wird und dass der Ausdruck einer Lohnabrechnung des Arbeitnehmers (300) beigefügt wird.

8. Verfahren nach einem der Ansprüche 1 bis 7, **dadurch gekennzeichnet, dass** der Arbeitnehmer (300) im Schritt k) dem Abschluss einer betrieblichen Altersvorsorge zustimmt und dass anschließend mindestens einer der folgenden Schritte ausgeführt wird:
p) Erzeugen eines Datensatzes (16) mit buchhaltungsrelevanten Informationen über die abgeschlossene betriebliche Altersvorsorge und Übermitteln dieses Datensatzes an das Computersystem (102) des Unternehmens,
q) Erzeugen eines Datensatzes (17) mit versicherungsrelevanten Informationen über die abgeschlossene betriebliche Altersvorsorge und automatisches Übermitteln dieses Datensatzes an ein Computersystem eines Versicherungskonzerns,
r) Erzeugen eines Datensatzes (18) mit vermittlerrelevanten Informationen über die abgeschlossene betriebliche Altersvorsorge und automatisches Übermitteln dieses Datensatzes an ein Computersystem eines Versicherungsvermittlers,
s) Erzeugen eines Datensatzes (19) mit arbeitnehmerrelevanten Informationen über die abgeschlossene betriebliche Altersvorsorge und automatisches Übermitteln dieses Datensatzes an den Arbeitnehmer (300).

9. Verfahren nach Anspruch 8, **dadurch gekennzeichnet, dass** der Datensatz (19) mit den arbeitnehmerrelevanten Informationen unter Verwendung des Schlüssels (104) verschlüsselt und automatisch elektronisch an den Arbeitnehmer (300) übermittelt wird.

10. Verfahren nach Anspruch 8, **dadurch gekennzeichnet, dass** der Datensatz (19) mit den arbeitnehmerrelevanten Informationen zum Erstellen eines Dokuments, in dem diese Informationen dargestellt sind, verwendet wird, und dass dieses Dokument automatisch an den Arbeitnehmer (300) versandt wird.

11. Verfahren nach einem der Ansprüche 1 bis 7, **dadurch gekennzeichnet, dass** der Arbeitnehmer (300) im Schritt k) den Abschluss einer betrieblichen Altersvorsorge ablehnt und dass anschließend automatisch eine Information über diese Entscheidung des Arbeitnehmers an das Computersystem (102) des Unternehmens übermittelt wird.

12. Verfahren nach einem der Ansprüche 1 bis 11, **dadurch gekennzeichnet, dass** der im Schritt g) übermittelte Datensatz Vorgaben des Unternehmens über die betriebliche Altersvorsorge enthält, in deren Rahmen das Unternehmen dem Abschluss einer betrieblichen Altersvorsorge zugestimmt.

13. Vorrichtung zum Vermitteln einer betrieblichen Altersvorsorge an Arbeitnehmer eines Unternehmens, wobei die Vorrichtung ein zentrales Computersystem (100) und ein dem Unternehmen zugeordnetes Computersystem (102) aufweist und zur Ausführung des Verfahrens nach Anspruch 1 die folgenden Merkmale aufweist:
m) das zentrale Computersystem (100) ist dazu eingerichtet, eine Datenstruktur mit Projektstammdaten (1) über das Unternehmen zu erzeugen,
n) das zentrale Computersystem (100) ist dazu eingerichtet, ein Softwareprogramm (200) zu erzeugen, das ein Eingabemodul (202) und ein Verschlüsselungsmodul (204) sowie die Projektstammdaten (1) umfasst,
o) die Vorrichtung ist dazu eingerichtet, das Softwareprogramms (200) von dem zentralen Computersystem (100) zu dem Computersystem (102) des Unternehmens zu übertragen und das Softwareprogramms (200) auf dem Computersystem (102) des Unternehmens auszuführen,
p) das Eingabemodul (202) ist dazu eingerichtet, persönliche Daten (2) über einen Arbeitnehmer (300) einschließlich Lohndaten (3) zu erfassen,
q) das Verschlüsselungsmodul (204) ist dazu eingerichtet, vertrauliche Daten über den Arbeitnehmer (300) zu verschlüsseln und einen Datensatz über den Arbeitnehmer (300) zu erzeugen, der einen unverschlüsselten Teil (10) und einen verschlüsselten Teil (9) enthält, sowie einen Schlüssel (104) zu erzeugen, mit dem der verschlüsselte Teil (9) entschlüsselbar ist,
r) die Vorrichtung ist dazu eingerichtet, den Schlüssel (104) an den Arbeitnehmer (300) zu übermitteln,
s) die Vorrichtung ist dazu eingerichtet, den Datensatz an das zentrale Computersystem (100) zu übermitteln,
t) die Vorrichtung ist zum Übermitteln des Schlüssels (104) an das zentrale Computersystem (100) durch den Arbeitnehmer (300) eingerichtet,
u) das zentrale Computersystem (100) ist dazu eingerichtet, den verschlüsselten Teils (9) des Datensatzes zu entschlüsseln,
v) die Vorrichtung ist dazu eingerichtet, ein Angebot für eine betriebliche Altersvorsorge an den Arbeitnehmer (300) zu übermitteln,
w) das zentrale Computersystem (100) ist zum Eingeben einer Entscheidung über das Angebot durch den Arbeitnehmer (300) eingerichtet, und
x) das zentrale Computersystem (100) ist dazu eingerichtet, die Entscheidung zu dokumentieren.

14. Vorrichtung nach Anspruch 13, **dadurch gekennzeichnet, dass** die Vorrichtung zur Ausführung eines Verfahrens nach einem der Ansprüche 2 bis 12 eingerichtet ist.
